(19) Europäisches Patentamt
European Patent Office
Office européen des brevets

(11) EP 2 150 581 B1

(12) EUROPÄISCHE PATENTSCHRIFT

(45) Veröffentlichungstag und Bekanntmachung des Hinweises auf die Patenterteilung:
**01.01.2014 Patentblatt 2014/01**

(21) Anmeldenummer: **08717918.0**

(22) Anmeldetag: **18.03.2008**

(51) Int Cl.:
***C08L 33/08*** *(2006.01)* ***C08L 33/10*** *(2006.01)*
***C08L 25/12*** *(2006.01)*

(86) Internationale Anmeldenummer:
**PCT/EP2008/053183**

(87) Internationale Veröffentlichungsnummer:
**WO 2008/148587 (11.12.2008 Gazette 2008/50)**

(54) **EINGEFÄRBTE ZUSAMMENSETZUNG MIT ERHÖHTER SPANNUNGSRISSBESTÄNDIGKEIT**

COLOURED COMPOSITION WITH INCREASED STRESS CRACKING RESISTANCE

COMPOSITION TEINTÉE PRÉSENTANT UNE MEILLEURE RÉSISTANCE À LA FISSURATION SOUS CONTRAINTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.06.2007 DE 102007026201**

(43) Veröffentlichungstag der Anmeldung:
**10.02.2010 Patentblatt 2010/06**

(73) Patentinhaber: **Evonik Röhm GmbH
64293 Darmstadt (DE)**

(72) Erfinder:
- **SCHULTES, Klaus
65193 Wiesbaden (DE)**
- **HÖSS, Werner
Shanghai 200237 (CN)**
- **MEHLER, Nils
64395 Brensbach (DE)**

(56) Entgegenhaltungen:
**EP-A- 0 508 173 EP-A- 0 627 461**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine eingefärbte Zusammensetzung mit erhöhter Spannungsrissbeständigkeit sowie ihre Verwendung.

## Stand der Technik

Polymethylmethacrylat (PMMA)-Zusammensetzungen werden seit langem im Automobilbereich, insbesondere als Heckleuchtenabdeckungen und Instrumentenabdeckungen, eingesetzt. In den letzten Jahren wird dieses Material auch zunehmend für gedeckt eingefärbte Formteile verwendet. Anwendungen sind hier u. a. Spoiler, Säulenblenden, Fensterführungsleisten, Außenspiegel und Außenspiegelfüße.

Diese PMMA Zusammensetzungen werden üblicherweise über Extrusion, Coextrusion, Spritzguss oder Mehrkomponenten-Spritzguss zu Formkörper für den Außenbereich verarbeitet. Somit besteht bei diesen Anwendungen zumindest die oberste Schicht aus PMMA. Sie bewirkt aufgrund der Witterungsstabilität und Oberflächenhärte von PMMA einen Schutz der darunter liegenden Matrices.

Da die Formkörper häufig dunkel eingefärbt sind (die PMMA-Schicht selbst oder darunter liegende Schichten), werden diese unter Sonneneinstrahlung stark aufgeheizt. Daher ist eine Anforderung an die PMMA-Zusammensetzung eine hohe Wärmeformbeständigkeit, damit die entsprechenden Klimatests der Formkörper bestanden werden und keine Erweichung des Formkörpers auftritt.

Daneben müssen die Formkörper eine hohe Spannungsrissbeständigkeit und eine hohe Chemikalienbeständigkeit ausweisen, da diese Anwendungen oft mit Reinigungsmittel, Benzin und anderen aggressiven Agenzien in Kontakt kommen.

Weiterhin müssen die bekannten Eigenschaften von PMMA-Zusammensetzungen oder PMMA-Formkörper, wie Verarbeitbarkeit und Mechanik, bestehen bleiben.

EP 0 508 173 B1 beschreibt die Verwendung von Polymerblends aus 55 Gew.-% bis 98 Gew.-% PMMA, 2 Gew.-% bis 45 Gew.-% eines Styrol-Acrylnitril-Copolymers (SAN) und optionalen weiteren Verarbeitungshilfsmitteln zur Herstellung verschiedener Formteile. Das PMMA enthält laut Beschreibung mindestens 80 Gew.-% Methylmethacrylat (MMA)-Einheiten. In den Beispielen wird eine Spannungsrissbildung nach 2,1 min bis 5,5 min beobachtet. Dieser Wert ist jedoch mit den vorliegenden Ergebnissen nach dem ESCR-Test nicht vergleichbar. Die Vicat-Erweichungstemperatur eines exemplarischen PMMA-SAN-Polymerblends ist 106°C.

In ähnlicher Weise offenbart EP 0 627 461 B1 ein witterungsbeständiges Blend aus 49 Gew.-% bis 99 Gew.-% PMMA und 0,95 Gew.-% bis 50 Gew.-% SAN sowie 0,05 Gew.-% bis 1 Gew.-% eines bestimmten Stabilisierungspakets. Auch hier enthält PMMA mindestens 80 Gew.-% MMA-Einheiten. In den Beispielen wird eine Spannungsrissbildung nach 680 s bis 750 s beobachtet. Dieser Wert ist jedoch mit den vorliegenden Ergebnissen nach dem ESCR-Test nicht vergleichbar. Eine Verbesserung der Wärmeformbeständigkeit wird nicht beschrieben.

JP 03-217446 A2 betrifft ein Blend aus einem Copolymer von aromatischen Vinylmonomeren und (Meth) acrylsäuren, PMMA und SAN. Die Blends weisen vergleichsweise hohe Wärmeformbeständigkeitswerte (114°C) auf. Allerdings ist die Transmission der Formkörper nur 84 %.

JP 02-272050 A2 beschreibt ein Blend mit guter Wärmeformbeständigkeit und Schlagzähigkeit aus

a) einem Copolymer von 40 Gew.-% bis 90 Gew.-% MMA, 5 Gew.-% bis 20 Gew.-% Maleinsäureanhydrid, 5 Gew.-% bis 40 Gew.-% Styrol und 1 Gew.-% bis 15 Gew.-% $C_{1-4}$-Alkylacrylat,
b) einem Copolymer von Acrylnitril und aromatischen Vinylverbindungen oder einem MMA-$C_{1-4}$-Alkylacrylat-Copolymer
c) einem Schlagzähmodifizierungsmittel aus mit Acrylnitril und einer aromatischen Vinylverbindung gepfropftem Gummi.

Der Brechungsindex-Unterschied zwischen der Mischung der Komponenten a) und b) sowie der Komponente c) soll höchstens 0,005 sein. Trotzdem zeigen derartige Zusammensetzungen eine starke Abhängigkeit der optischen Eigenschaften, insbesondere der Transparenz und/oder des Farbeindrucks, von der Temperatur.

Die Anmeldung WO 2005/047392A1 offenbart eine Polymermischung, die folgende Komponenten enthält:

a) ein niedermolekulares (Meth)acrylat(co)polymer, charakterisiert durch eine Lösungsviskosität in Chloroform bei 25°C (ISO 1628 - Teil 6) von kleiner/gleich 55 ml/g,
b) ein Schlagzähmodifizierungsmittel auf Basis von vernetzten Poly(meth)acrylaten,
c) ein höhermolekulares (Meth)acrylat(co)polymer, charakterisiert durch eine Lösungsviskosität in Chloroform bei 25°C (ISO 1628 - Teil 6) von größer/gleich 65 ml/g und/oder
d) ein weiteres von a) verschiedenes (Meth)acrylat(co)polymer, charakterisiert durch eine Lösungsviskosität in

Chloroform bei 25°C (ISO 1628 - Teil 6) von 50 bis 55 ml/g,

wobei die Komponenten a), b), c) und/oder d) jeweils für sich genommen als einzelne Polymere als auch als Mischungen von Polymeren verstanden werden können,
wobei a), b), c) und/oder d) sich zu 100 Gew.-% addieren,
wobei die Polymermischung noch übliche Zusatz, Hilfs- und/oder Füllstoffe enthalten kann. Ein aus der Polymermischung hergestellter Probekörper soll bei Benetzung der Oberfläche mit Isopropanol bei konstanter Randfaserdehnung von 0,39 % eine Bruchzeit größer 1800 s und bei konstanter Randfaserdehnung von 0,50 % eine Bruchzeit größer 700 s zeigen. Allerdings ist wiederum eine starke Abhängigkeit der optischen Eigenschaften, insbesondere der Transparenz und/oder des Farbeindrucks, von der Temperatur zu beobachten. Weiterhin ist insbesondere eine verbesserte Spannungsrissbeständigkeit und eine bessere Verarbeitbarkeit wünschenswert.

**Aufgabe und Lösung**

Der vorliegenden Erfindung lag nun die Aufgabe zugrunde, Möglichkeiten zur Verbesserung der Spannungsrissbeständigkeit von eingefärbten Zusammensetzungen und von Formkörpern aufzuzeigen. Gleichzeitig sollte eine möglichst hohe Wärmeformbeständigkeit und möglichst gute optische Eigenschaften erreicht werden. Insbesondere wurde eine möglichst geringe Temperaturabhängigkeit des optischen Erscheinungsbildes der Zusammensetzungen und der Formkörper gewünscht. Weiterhin sollten möglichst gute mechanische Eigenschaften, eine möglichst gute Verarbeitbarkeit sowie eine möglichst hohe Langzeitstabilität und Witterungsbeständigkeit realisiert werden. Besonders zweckmäßige Verfahren zur Herstellung der neuen Zusammensetzungen und Formkörper sowie besonders vorteilhafte Anwendungsmöglichkeiten sollten ebenfalls angegeben werden.

Gelöst werden diese sowie weitere Aufgaben, die sich aus den obigen Überlegungen zwangsläufig ableiten lassen oder sich unmittelbar ergeben, durch eine eingefärbte Zusammensetzung mit allen Merkmalen des vorliegenden Anspruchs 1. Die auf diesen Anspruch rückbezogenen Unteransprüche beschreiben besonders zweckmäßige Ausgestaltungen der Zusammensetzung und die weiteren Ansprüche betreffen besonders vorteilhafte Anwendungen der Zusammensetzung.

Dadurch, dass man eine eingefärbte Zusammensetzung bereitstellt, die, jeweils bezogen auf ihr Gesamtgewicht,

A) 50,0 Gew.-% bis 99,5 Gew.-% mindestens eines (Meth)acrylat(co)polymers und
B) 0,5 Gew.-% bis 50,0 Gew.-% mindestens eines Copolymerisats, erhältlich durch Polymerisation eines Monorerengemischs aus

i. 70 Gew.-% bis 92 Gew.-% eines vinylaromatischen Monomers und
ii. 8 Gew.-% bis 30 Gew.-% Acrylnitril oder Methacrylnitril oder deren Mischungen
iii. 0 Gew.- % bis 22 Gew.-% mindestens eines weiteren Monomeren enthält, wobei die Zusammensetzung bei 50°C einen $\Delta E$ kleiner 0,15 aufweist, wobei $\Delta E$ wie nachstehend definiert ist, und die Zusammensetzung mindestens ein (Meth)acrylat(co)polymer a) mit einer Lösungsviskosität in Chloroform bei 25°C (ISO 1628 - Teil 6) von größer 55 ml/g enthält, gelingt es auf nicht ohne weiteres vorhersehbare Weise eine eingefärbte Zusammensetzung zugänglich zu machen, die sich für die Herstellung von Formkörpern mit verbesserter Spannungsrissbeständigkeit hervorragend eignet. Dabei ist die Zusammensetzung auf vergleichbar einfache Art und Weise, insbesondere mit relativ geringem energetischen Aufwand herstellbar und verarbeitbar und ermöglicht auch die Verwirklichung von anspruchsvollen Teilegeometrien.

Gleichzeitig zeichnen sich die aus der Zusammensetzung herstellbaren Gegenstände durch eine Kombination vorteilhafter Eigenschaften aus:

- ➢ Sie haben sehr gute optische Eigenschaften, insbesondere eine hohe Farbkonstanz und zeigen eine vergleichsweise geringe Abhängigkeit des optischen Erscheinungsbildes von der Temperatur.
- ➢ Sie besitzen eine sehr hohe Wärmeformstabilität.
- ➢ Sie zeigen hervorragende mechanische Eigenschaften, insbesondere ein hohes E-Modul und eine vergleichsweise hohe Vicat-Erweichungstemperatur.
- ➢ Die Langzeitstabilität und Witterungsbeständigkeit der Formkörper ist ebenfalls hervorragend.

**Ausführung der Erfindung**

**(Meth)acrylat(co)polymer A)**

Die Erfindung betrifft eine Formmasse, die mindestens ein (Meth)acrylat(co)polymer A) enthält. Dabei kann das (Meth)acrylat(co)polymer sowohl als einzelnes Polymere als auch als Mischung mehrerer Polymere vorliegen.

Eigenschaften der (Meth)acrylat(co)polymers A)

Das oder die (Meth)acrylat(co)polymer(e) wird/werden in den Mengenanteilen und in der Zusammensetzung vorzugsweise so gewählt, dass ein aus dem/den (Meth)acrylat(co)polymer(en) hergestellter Probekörper gleichzeitig folgende Eigenschaften aufweist:

I. ein Zugmodul (ISO 527) von mindestens 2600 MPa, bevorzugt mindestens 2750 MPa, besonders bevorzugt mindestens 2850 MPa, insbesondere mindestens 3000 MPa,
II. eine Vicaterweichungstemperatur VET (ISO 306-B50) von mindestens 109°C, bevorzugt mindestens 110°C, besonders bevorzugt mindestens 112°C, insbesondere im Bereich von 110°C bis 125°C,
III. eine Schlagzähigkeit (ISO 179-2D, flatwise) von mindestens 17 $kJ/m^2$, bevorzugt mindestens 18 $KJ/m^2$, vorzugsweise mindestens 20 $kJ/m^2$, besonders bevorzugt mindestens 25 $kJ/m^2$, insbesondere mindestens 30 $kJ/m^2$
IV. einen Schmelzindex MVR (ISO 1133, 230°C / 3,8 kg) von mindestens 1,5 $cm^3$/10 min, bevorzugt mindestens 1,65 $cm^3$/10 min, besonders bevorzugt mindestens 2,0 $cm^3$/10 min, insbesondere mindestens 3,0 $cm^3$/10 min.

Übliche Zusatz, Hilfs- und/oder Füllstoffe werden zweckmäßigerweise derart gewählt, dass das oben genannte Eigenschaftsprofil möglichst nicht oder höchstens geringfügig beeinträchtigt wird.

**Weitere Eigenschaften**

Weiterhin liegt/liegen das/die (Meth)acrylat(co)polymer(e) in den Mengenanteilen und in der Zusammensetzung vorzugsweise so vor, dass ein aus dem/den (Meth)acrylat(co)polymer(en) hergestellter Probekörper auch zumindest einige der folgenden Eigenschaften aufweist:

Eigenfarbe
Lichttransmissionsgrad $T_{D65}$ nach DIN 5033/7 von mindestens 50 %, bevorzugt mindestens 55 %.

Gelbwert
Der Gelbwert, bestimmbar nach DIN 6167 (Lichtart D65, 10° an 3 mm Schichtdicke), soll vorzugsweise weniger als 20, bevorzugt weniger als 17 betragen.

Spannungsrissbeständigkeit (ESCR-Methode)
Bruchzeit bei Benetzung der Oberfläche mit Isopropanol bei konstanter Randfaserdehnung von

- 0,39 %: > 1800 s
- 0,50 %: > 700 s

Oberflächenglanz
R (60°): > 48 %, bevorzugt > 50 %

Erfindungsgemäß zeichnet sich die Zusammensetzung u. a. dadurch aus, dass sie mindestens ein (Meth) acrylat(co)polymer a) mit einer Lösungsviskosität in Chloroform bei 25°C (ISO 1628 - Teil 6) von größer 55 ml/g, bevorzugt größer/gleich 65 ml/g, insbesondere im Bereich von 68 ml/g bis 75 ml/g, enthält.
Dies kann einem Molekulargewicht $M_w$ (Gewichtsmittel) von 160000 g/mol (Bestimmung von $M_w$ mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).
Im Rahmen einer ersten Variante der vorliegenden Erfindung ist das (Meth)acrylat(co)polymer a) ein Copolymer aus Methylmethacrylat, Styrol und Maleinsäureanhydrid.
Geeignete Mengenanteile können z. B. sein:

50 Gew.-% bis 90 Gew.-%, bevorzugt 70 Gew.-% bis 80 Gew.-% Methylmethacrylat,
10 Gew.-% bis 20 Gew.-%, bevorzugt 12 Gew.-% bis 18 Gew.-% Styrol und
5 Gew.-% bis 15 Gew.-%, bevorzugt 8 Gew.-% bis 12 Gew.-% Maleinsäureanhydrid.

Entsprechende Copolymere können in sich bekannter Weise durch radikalische Polymerisation erhalten werden. EP-A 264 590 beschreibt z. B. ein Verfahren zur Herstellung einer Formmasse aus einem Monomerengemisch aus Methylmethacrylat, Vinylaromat, Maleinsäureanhydrid sowie gegebenenfalls aus einem niederen Alkylacrylat, bei dem die Polymerisation bis zu einem Umsatz von 50 % in An- oder Abwesenheit eines nicht polymerisierbaren organischen Lösungsmittels durchgeführt wird und bei dem die Polymerisation ab einem Umsatz von mindestens 50 % im Temperaturbereich von 75°C bis 150°C in Gegenwart eines organischen Lösungsmittels bis zu einem Umsatz von mindestens 80 % fortgesetzt wird und anschließend die niedermolekularen flüchtigen Bestandteile verdampft werden.

In JP-A 60-147 417 wird ein Verfahren zur Herstellung einer hochwärmeformbeständigen Polymethacrylat-Formmasse beschrieben, bei dem eine Monomermischung aus Methylmethacrylat, Maleinsäureanhydrid und mindestens einem Vinylaromaten in einen Polymerisationsreaktor, der für Lösungs- oder Massepolymerisation geeignet ist, bei einer Temperatur von 100°C bis 180°C eingespeist und polymerisiert wird. DE-OS 44 40 219 beschreibt ein weiteres Herstellungsverfahren.

Der Anteil des (Meth)acrylat(co)polymers a), bezogen auf das Gesamtgewicht aller (Meth)acrylat(co)polymere, beträgt vorzugsweise mindestens 75 Gew.-%, bevorzugt mindestens 85 Gew.-%, insbesondere mindestens 95 Gew.-%.

Im Rahmen einer zweiten Variante der vorliegenden Erfindung ist das (Meth)acrylat(co)polymer a) ein Copolymers aus 95 Gew.-% bis 99,5 Gew.-% Methylmethacrylat und 0,5 Gew.-% bis 5 Gew.-%, bevorzugt 1 Gew.-% bis 4 Gew.-% Methylacrylat.

Die Zusammensetzung enthält weiterhin mindestens ein niedermolekularen (Meth)acrylat(co)polymer b) mit einer Lösungsviskosität in Chloroform bei 25°C (ISO 1628 - Teil 6) von kleiner/gleich 55 ml/g, bevorzugt kleiner/gleich 50 ml/g, insbesondere 45 ml/g bis 55 ml/g.

Dies kann einem Molekulargewicht $M_w$ (Gewichtsmittel) von 95000 g/mol (Bestimmung von $M_w$ mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Das (Meth)acrylat(co)polymer b) ist ein Copolymer aus Methylmethacrylat, Styrol und Maleinsäureanhydrid.

Geeignete Mengenanteile können z. B. sein:

50 Gew.-% bis 90 Gew.-%, bevorzugt 70 Gew.-% bis 80 Gew.-% Methylmethacrylat,
10 Gew.-% bis 20 Gew.-%, bevorzugt 12 Gew.-% bis 18 Gew.-% Styrol und
5 Gew.-% bis 15 Gew.-%, bevorzugt 8 Gew.-% bis 12 Gew.-% Maleinsäureanhydrid.

Wertvolle Hinweise zur Herstellung derartiger Copolymere können u. a. der EP-A 264 590, der JP-A 60-147 417 und der DE-OS 44 40 219 entnommen werden.

Das (Meth)acrylat(co)polymer b) kann z. B. hergestellt werden, indem man eine Monomermischung aus z. B. 6355 g Methylmethacrylat, 1271 g Styrol und 847 g Maleinsäureanhydrid mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt. Das resultierende Gemisch kann in eine Polymerisationskammer gefüllt und z. B. 10 Minuten entgast werden. Danach kann im Wasserbad z. B. 6 Stunden bei 60°C, nachfolgend 30 Stunden bei 55°C Wasserbadtemperatur polymerisiert werden. Nach etwa 30 Stunden erreicht das Polymerisationsgemisch mit etwa 126°C seine Maximaltemperatur. Nach Entfernung der Polymerisationskammer aus dem Wasserbad wird das Polymerisat entsprechend in der Polymerisationskammer noch etwa 7 Stunden z. B. bei 117°C im Luftschrank getempert.

Die (Meth)acrylat(co)polymere a) und b) liegen günstigerweise in folgenden Mengenverhältnissen vor, die sich vorzugsweise zu mindestens 75 Gew.-%, bevorzugt zu mindestens 90 Gew.-%, insbesondere zu 100 Gew.-%, bezogen auf das Gesamtgewicht aller (Meth)acrylat(co)polymere, addieren.

(Meth)acrylat(co)polymer a): 25 Gew.-% bis 75 Gew.-%, bevorzugt 40 Gew.-% bis 60 Gew.-%, insbesondere 45 Gew.-% bis 55 Gew.-%,
(Meth)acrylat(co)polymer b): 25 Gew.-% bis 75 Gew.-%, bevorzugt 40 Gew.-% bis 60 Gew.-%, insbesondere 45 Gew.-% bis 55 Gew.-%.

**Copolymerisat B)**

Neben dem (Meth)acrylat(co)polymer enthält die erfindungsgemäße Formmasse mindestens ein weiteres Copolymerisat (SAN-Copolymer) B), das durch Polymerisation eines Monomerengemisches aus

i. 70 Gew.-% bis 92 Gew.-%, bevorzugt 75 Gew.-% bis 82 Gew.-%, insbesondere 78 Gew.-% bis 81 Gew.-% mindestens eines vinylaromatischen Monomers und
ii. 8 Gew.-% bis 30 Gew.-%, bevorzugt 18 Gew.-% bis 25 Gew.-%, insbesondere 19 Gew.-% bis 22 Gew.-% Acrylnitril oder Methacrylnitril oder deren Mischungen
iii. 0 Gew.- % bis 22 Gew.-% mindestens eines weiteren Monomeren erhältlich ist.

Als vinylaromatische Monomere eignen sich insbesondere Styrol, $\alpha$-Methystyrol, tert.-Butylstyrol, Monochlorstyrol und Vinyltoluol, besonders bevorzugt Styrol und $\alpha$-Methylstyrol.

Weiterhin haben sich SAN-Copolymere mit einem Molekulargewicht (Gewichtsmittelwert Mw) von 60 000 g/mol bis 300 000 g/mol, vorzugsweise von 100 000 g/mol bis 200 000 g/mol, ganz besonders bewährt, die vorzugsweise nach dem in der GB-PS 14 72 195 beschriebenen Verfahren hergestellt wurden. Die Ermittlung des Molekulargewichts erfolgt dabei auf an sich bekannte Weise, insbesondere durch Lichtstreuverfahren.

Die Menge der Komponente B), bezogen auf das Gesamtgewicht der Formmasse, beträgt erfindungsgemäß 0,5 Gew.-% bis 50,0 Gew.-%, bevorzugt 20,0 Gew.-% bis 40,0 Gew.-%.

Die Mengen der Komponenten A) und B) addieren sich vorzugsweise zu mindestens 75 Gew.-%, bevorzugt zu mindestens 90 Gew.-%, insbesondere zu 100 Gew.-%, bezogen auf das Gesamtgewicht der Zusammensetzung.

Die Herstellung der Komponente B) führt man in der Regel nach bekannten Polymerisationsverfahren, wie Masse-, Lösungs-, Emulsions- oder Perlpolymerisation, durch. Solche Verfahren sind beispielsweise im Kunststoffhandbuch, Hrsg. Vieweg und Daumiller, Band V; Polystyrol, Carl-Hanser-Verlag, München 1969, S. 124 ff. und in der GB-PS 14 72 195 beschrieben.

**Übliche Zusatz-, Hilfs- und/oder Füllstoffe**

Die erfindungsgemäße Zusammensetzung kann noch übliche Zusatz-, Hilfs-und/oder Füllstoffe, wie z. B. Thermostabilisatoren, UV-Stabilisatoren, UV-Absorber, Antioxidantien, enthalten, sofern die Eigenschaften der erfindungsgemäßen Zusammensetzung durch diese Zusätze nicht nachteilig beeinflusst werden.

**UV-Stabilisatoren und Radikalfänger**

Optional enthaltene UV-Schutzmittel sind z. B. Derivate des Benzophenons, dessen Substituenten wie Hydroxyl- und/oder Alkoxygruppen sich meist in 2-und/oder 4-Stellung befinden. Hierzu zählen 2-Hydroxy-4-n-octoxybenzophenon, 2,4-Dihydroxybenzophenon, 2,2'-Dihydroxy-4-methoxybenzophenon, 2,2',4,4'-Tetrahydroxybenzophenon, 2,2'-Dihydroxy-4,4'-dimethoxybenzophenon, 2-Hydroxy-4-methoxybenzophenon. Des weiteren sind substituierte Benztriazole als UV-Schutz-Zusatz sehr geeignet, wozu vor allem 2-(2-Hydroxy-5-methylphenyl)-benztriazol, 2-[2-Hydroxy-3,5-di-(alpha,alpha-dimethyl-benzyl)-phenyl]-benztriazol, 2-(2-Hydroxy-3,5-di-t-butylphenyl)-benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)-benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol zählen.

Weiterhin einsetzbare UV-Schutzmittel sind 2-Cyano-3,3-diphenylacrylsäureethylester, 2-Ethoxy-2'-ethyl-oxalsäurebisanilid, 2-Ethoxy-5-t-butyl-2'-ethyl-oxalsäurebisanilid und substituierte Benzoesäurephenylester.

Die UV-Schutzmittel können als niedermolekulare Verbindungen, wie sie vorstehend angegeben sind, in den zu stabilisierenden Polymethacrylatmassen enthalten sein. Es können aber auch UV-absorbierende Gruppen in den Matrixpolymermolekülen kovalent nach Copolymerisation mit polymerisierbaren UV-Absorptionsverbindungen, wie z. B. Acryl-, Methacryl oder Allylderivaten von Benzophenon- oder Benztriazolderivaten, gebunden sein.

Der Anteil von UV-Schutzmitteln, wobei dies auch Gemische chemisch verschiedener UV-Schutzmittel sein können, beträgt in der Regel 0,01 Gew.-% bis 1,0 Gew.-%, vor allem 0,01 Gew.-% bis 0,5 Gew.-%, insbesondere 0,02 Gew.-% bis 0,2 Gew.-%, bezogen auf die Gesamtheit aller Bestandteile des erfindungsgemäßen Polymethacrylatharzes.

Als Beispiel für Radikalfänger/UV-Stabilisatoren seien hier sterisch gehinderte Amine, die unter dem Namen HALS (Hindered Amine Light Stabilizer) bekannt sind, genannt. Sie können für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können.

Beispiele für stabilisierend wirkende HALS-Verbindungen, die auch als Gemische eingesetzt werden können sind:

Bis-(2,2,6,6-tetramethyl-4-piperidyl)-sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-ß-hydroxyethyl-2,2,6,6-tetramethyl-4-hydroxypiperidin-bernsteinsäureester) und Bis-(N-methyl-2,2,6,6-tetramethyl-4-piperidyl)-sebacat.

Angewendet werden die Radikalfänger/UV-Stabilisatoren in den erfindungsgemäßen Zusammensetzungen in Mengen von 0,01 Gew.-% bis 1,5 Gew.-%, vor allem in Mengen von 0,02 Gew.-% bis 1,0 Gew.-%, insbesondere in Mengen von 0,02 Gew.-% bis 0,5 Gew.-% bezogen auf die Gesamtheit aller Bestandteile.

**Gleitmittel bzw. Formtrennmittel**

Für das Spritzgussverfahren sind insbesondere Gleitmittel bzw. Formtrennmittel von Bedeutung, die ein mögliches Anhaften der Formmasse an die Spritzgussform vermindern bzw. ganz verhindern können.

Als Hilfsstoffe können demnach Gleitmittel, z. B. ausgewählt aus der Gruppe der gesättigten Fettsäuren mit weniger als $C_{20}$, bevorzugt $C_{16}$ bis $C_{18}$ Kohlenstoffatomen oder der gesättigten Fettalkohole mit weniger als $C_{20}$, bevorzugt $C_{16}$ bis $C_{18}$ Kohlenstoffatomen enthalten sein. Bevorzugt sind geringe Mengenanteile von höchstens 0,25 Gew.-%, z. B. 0,05 Gew.-% bis 0,2 Gew.-%, bezogen auf die Formmasse enthalten.

Geeignet sind z. B. Stearinsäure, Palmitinsäure, technische Gemische aus Stearin- und Palmitinsäure. Weiterhin geeignet sind z. B. n-Hexadecanol, n-Octadecanol, sowie technische Gemische aus n-Hexadecanol und n-Octadecanol.

Ein besonders bevorzugtes Gleit- bzw. Formtrennmittel ist Stearylalkohol.

**Weitere Zusatz-, Hilfs- und/oder Füllstoffe**

Im Rahmen der vorliegenden Erfindung hat sich auch der Zusatz der Komponenten $C_1$), $C_2$), $C_3$) und/oder $C_4$) ganz besonders bewährt.

Die Komponente $C_1$) bezeichnet Triarylphosphite der allgemeinen Formel (I)

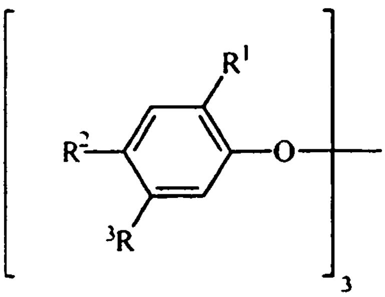

(I)

in welcher $R^1$ und $R^2$ für $C_1$-$C_{12}$-Alkyl, wie Methyl, Ethyl, Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1.2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 2-Methylhexyl, 3-Methylhexyl, 4-Methylhexyl, 5-Methylhexyl, 1-Ethylpentyl, 2-Ethylpentyl, 1-Propylbutyl, Octyl, Nonyl, Decyl, Undecyl und Dodecyl, vorzugsweise in 1-Position ($\alpha$) verzweigte $C_3$-$C_{12}$-Alkylreste, insbesondere $C_3$-$C_7$Alkylreste, wie 1-Methylethyl, 1-Methylpropyl, 1,1-Dimethylethyl, 1-Methylbutyl, 1,2-Dimethylpropyl, 1,1-Dimethylpropyl, 1-Ethylpropyl, 1-Methylpentyl, 1,2-Dimethylbutyl, 1,3-Dimethylbutyl, 1,1-Dimethylbutyl, 1,1,2-Trimethylpropyl, 1,2,2-Trimethylpropyl, 1-Ethylbutyl, 1-Ethyl-2-methylpropyl, 1-Methylhexyl, 1-Ethylpentyl und 1-Propylbutyl sowie 1,1,3,3-Tetramethylbutyl, 1,1,2,2,5,5-Hexamethylhexyl,

$C_5$-$C_8$-Cycloalkyl, wie Cyclopentyl, Cyclohexyl, Cycloheptyl und Cyclooctyl, bevorzugt Cyclohexyl,

$C_6$-$C_{10}$-Aryl und $C_6$-$C_{10}$-Aryl-$C_1$-$C_4$-Alkyl, deren Arylreste bis zu dreifach mit $C_1$-$C_4$-Alkyl substituiert sein können, wie Phenyl, Naphthyl oder 2,2-Dimethylbenzyl, stehen, und $R^3$ Wasserstoff und $C_1$-$C_4$-Alkyl, wie Methyl, Ethyl, n-, i-Propyl, n-, i-, sek.- und tert.-Butyl, bevorzugt Wasserstoff und Methyl, bedeutet.

Beispiele für Verbindungen (I), denen im Hinblick auf die vorliegende Erfindung besondere Bedeutung zukommt, sind die im Handel erhältlichen Tris-(2,4-di-tert.-butylphenyl)phosphit (Irgafos TM 168, Ciby-Geigy) und Tris(nonylphenyl) phosphit, bevorzugt Tris-(2,4-di-tert.-butylphenyl)-phosphit.

Die Komponente $c_2$) bezeichnet ein Amin der allgemeinen Formel (II)

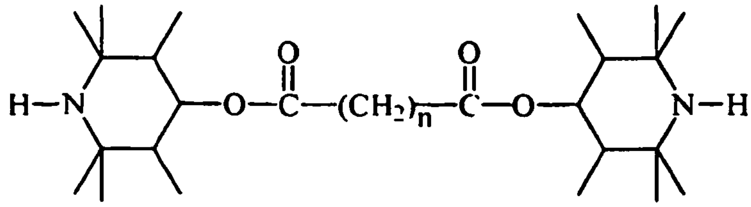

(II)

in der n für die Werte 2 bis 10, bevorzugt 2 bis 8, steht. Verbindungen dieses Typs sind auch unter der Bezeichnung HALS (hindered amine light stabilizer)-Verbindungen bekannt und im Handel erhältlich.

Ein Beispiel für Verbindungen (II), dem im Hinblick auf die vorliegende Erfindung besondere Bedeutung zukommt, ist Bis-(2,2,6,6-tetramethyl-4-piperidyl)-sebacat (unter dem Namen Tinuvin TM 770 DF (Ciba Geigy) im Handel).

Die Komponente $c_3$) bezeichnet ein Benzotriazol der allgemeinen Formel (III)

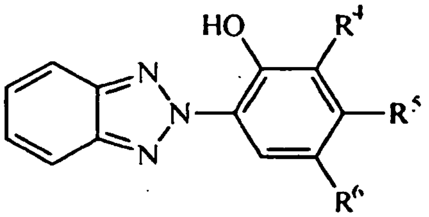

(III)

in der $R^4$, $R^5$ und $R^6$ die Bedeutung von $R^1$ haben.

Beispiele für Verbindungen (III), denen im Hinblick auf die vorliegende Erfindung besondere Bedeutung zukommt, sind 2-(2'-Hydroxy-5'-methyl-phenyl)-benzotriazol (unter dem Namen Tinuvin TM P (Ciba Geigy) im Handel erhältlich), oder 2-(2'-Hydroxy-3'-dodecyl-5'-methyl-decyl)benzotriazol.

Die Komponente $c_4$) bezeichnet ein Phenol der allgemeinen Formel (IV)

$AB_k$ (IV)

wobei k 1, 2 oder 4 bedeutet und, falls k = 1 ist, A für $-COOR^7$, $-CONHR^7$,

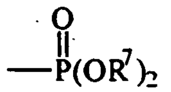

steht,
wobei $R^7$ $C_1$-$C_{21}$-Alkyl bedeutet, und
falls k = 2 ist, A für $-CONH-(CH_2)_n-CONH-$,

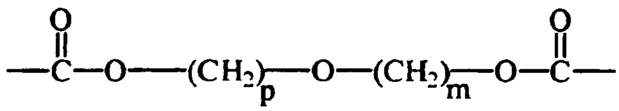

oder

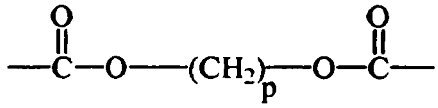

steht, wobei p und m ganze Zahlen von 1 bis 10 bedeuten, und falls k = 4 ist, A für

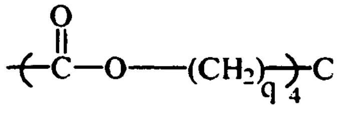

steht, wobei q eine ganze Zahl von 1 bis 4 bedeutet, und
B für

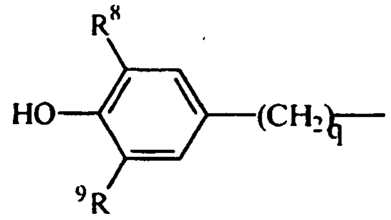

steht,
wobei $R^8$ und $R^9$ für Wasserstoff, Methyl oder tert. Butyl stehen.

Die Zugabe der Komponente $c_4$) kann in einigen Fällen zu einer weiteren Verbesserung der Spannungsrissbeständigkeit nach Bewitterung führen.

Beispiele für Verbindungen (IV), denen im Hinblick auf die vorliegende Erfindung besondere Bedeutung zukommt, sind Octadecyl-3-(3,5-di-tert.-butyl-4-hydroxyphenyl)-propionat (unter dem Namen Irganox TM 1076 (Ciba Geigy) im Handel), sowie

IRGANOX 1098

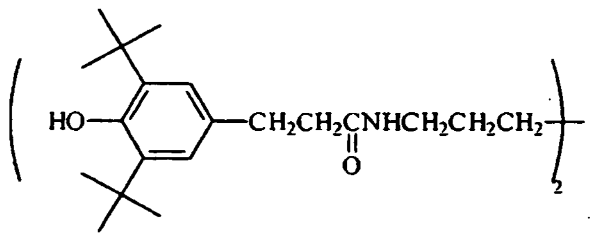

IRGANOX 1010

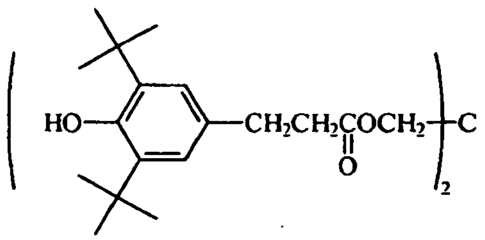

IRGANOX 1222

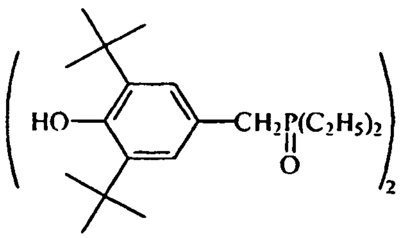

IRGANOX 245

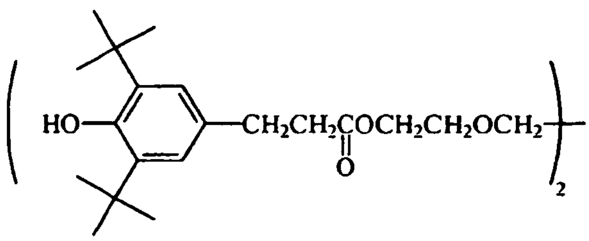

IRGANOX 259

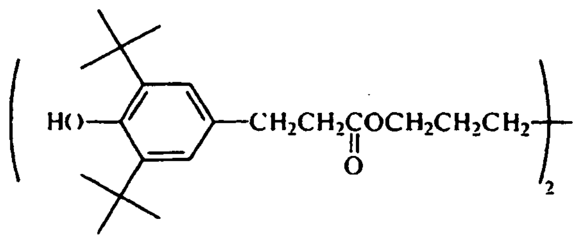

Bevorzugt werden die Komponenten $c_1$), $c_2$) und $c_3$) in Mischung eingesetzt, um einen synergistischer Effekt hinsichtlich der Verbesserung der Spannungsrissbeständigkeit nach Bewitterung zu erreichen.

Die bevorzugten Mengen der Komponenten $c_1$) bis $c_3$) liegen jeweils im Bereich von 1 Gew.-% bis 50 Gew.-%, bevorzugt von 30 Gew.-% bis 50 Gew.-%, bezogen auf die Summe der Mengen der Komponenten $c_1$) bis $c_3$), wobei sich die einzelnen Mengen zu 100 addieren.

Die Menge der Komponente $c_4$) wählt man vorzugsweise im Bereich von 0 Gew.-% bis 25 Gew.-%, bevorzugt im Bereich von 10 Gew.-% bis 25 Gew.-%, bezogen auf die Gesamtmenge der Komponenten $c_1$) bis $c_3$).

Die Gesamtmenge der Komponenten $c_1$) bis $c_4$), bezogen auf das Gesamtgewicht der Zusammensetzung, beträgt günstigerweise 0,05 Gew.-% bis 1 Gew.-%, vorzugsweise 0,1 Gew.-% bis 0,5 Gew.-%.

## Einfärbung der Zusammensetzung

Erfindungsgemäß ist die Zusammensetzung eingefärbt. Die Farbgebung erfolgt dabei vorzugsweise durch Farbmittel, die Farbstoffe oder Pigmente sein können. Farbstoffe bestehen vorzugsweise aus Farbstoffmolekülen, die sich in der Polymermatrix weitgehend molekular lösen oder mehr oder weniger molekular auf der Oberfläche absorbiert oder chemisch gebunden werden. Pigmente umfassen dagegen insbesondere Aggregate von Farbstoffmolekülen oder Mineralstoffen, die in der Polymermatrix unlöslich sind.

Ein Farbmittel kann weiterhin auch bei einer Temperatur in der Polymermatrix unlöslich sein und sich wie ein Pigment verhalten. Bei einer anderen, zumeist höheren, Temperatur kann es sich dagegen in der gleichen Polymermatrix als Farbstoff lösen. Im Rahmen der vorliegenden Erfindung werden jedoch solche Farbmittel besonders bevorzugt, deren Löslichkeit in der Polymermatrix im Temperaturbereich von 23°C bis 100°C um höchstens 10 % schwankt, bezogen auf die Löslichkeit bei 23°C.

Die Einfärbung führt vorliegend zu mindestens einer Absorption im sichtbaren Bereich, d. h. bei mindestens einer Wellenlänge im Bereich von 380 nm bis 750 nm. Die Absorption bei 23°C beträgt vorzugsweise mindestens 1 %, bevorzugt mindestens 5 %, insbesondere mindestens 10 %, verglichen mit eine Probe gleicher Beschaffenheit ohne Farbmittel.

Der Farbton der Zusammensetzung wird vorliegend nach dem Lab-Farbsystem beschrieben. Es ist standardisiert, gleichabständig, geräteunabhängig und baut auf der menschlichen Wahrnehmung auf.

Der Farbraum des L*a*b*-Systems ist wie folgt definiert:

- L* = Helligkeit (0 = Schwarz, 100 = Weiß)
- a* = Rot - Grün (-128 = Grün, +127 = Rot)
- b* = Gelb - Blau (-128 = Blau, +127 = Gelb)

Die erfindungsgemäße Zusammensetzung zeichnet sich durch eine außerordentliche Farbkonstanz aus. So zeigt sie bei 50°C einen ΔE kleiner 0,15, wobei ΔE gemäß der Beziehung (1) definiert ist:

$$\Delta E = \sqrt{(\Delta L^*)^2 + (\Delta a^*)^2 + (\Delta b^*)^2}, \quad (1)$$

in welcher

ΔL* : die Änderung der Farbkoordinate L* verglichen mit der Farbkoordinate L* bei 23°C
Δa* : die Änderung der Farbkoordinate a* verglichen mit der Farbkoordinate a* bei 23°C
Δb* : die Änderung der Farbkoordinate b* verglichen mit der Farbkoordinate b* bei 23°C

bezeichnen.

Bei 80°C ist ΔE vorzugsweise kleiner 0,3.

Der Zusatz von Additiven, wie z. B. Schlagzähmodifizierungsmitteln, mit deutlich abweichenden Temperaturverhalten des Brechungsindizes, verglichen mit der Polymermatrix, ist nach Möglichkeit zu vermeiden, da ansonsten ein signifikante Temperaturabhängigkeit des optischen Erscheinungsbildes zu beobachten ist.

## Volumen-Schmelzindex MVR der Formmasse

Im Rahmen der vorliegenden Erfindung hat die Zusammensetzung vorzugsweise einen Volumen-Schmelzindex MVR, gemessen nach ISO 1133 bei 230°C und 3,8 kg, von größer 1,2 $cm^3$ / 10 min, bevorzugt von größer 1,5 $cm^3$ / 10 min, insbesondere im Bereich von 1,7 $cm^3$ / 10 min bis 4,0 $cm^3$ / 10 min.

## Herstellung der Zusammensetzung

Die Zusammensetzung kann durch trockenes Abmischen der Komponenten, die als Pulver, Körner oder bevorzugt Granulate vorliegen können, hergestellt werden.

Die Zusammensetzung kann auch durch Schmelzen und Vermengen der Einzelkomponenten im Schmelzezustand oder durch Schmelzen trockener Vormischungen der Einzelkomponenten zu einer gebrauchsfertigen Formmasse verarbeitet werden. Dies kann z. B. in Ein- oder Zweischneckenextrudern erfolgen. Das erhaltene Extrudat kann anschließend granuliert werden. Übliche Zusatz, Hilfs- und/oder Füllstoffe können direkt zugemischt oder später von Endverbraucher nach Bedarf zugegeben werden.

### Verarbeitung zu Formkörpern

Die erfindungsgemäße Zusammensetzung eignet sich als Ausgangsstoff für die Herstellung von Formkörpern mit verbesserter Chemikalienbeständigkeit und Spannungsrissbeständigkeit. Die Umformung der Zusammensetzung kann auf an sich bekannte Weise, z. B. durch Verarbeitung über den elastoviskosen Zustand, d. h. durch Kneten, Walzen, Kalandrieren, Extrudieren oder Spritzgießen, erfolgen, wobei das Extrudieren und das Spritzgießen, insbesondere das Spritzgießen, vorliegend besonders bevorzugt werden.

Das Spritzgießen der Zusammensetzung kann auf an sich bekannte Weise bei Temperaturen im Bereich von 220°C - 260°C (Massetemperatur) und einer Werkzeugtemperatur von vorzugsweise 60°C bis 90°C erfolgen.

Die Extrusion wird vorzugsweise bei einer Temperatur von 220°C bis 260°C durchgeführt.

### Formkörper

Die auf diese Weise erhältlichen Formkörper zeichnen sich dadurch aus, dass sie bei 50°C einen $\Delta E$ kleiner 0,15, besonders bevorzugt kleiner **0,11,** und bei 80°C einen $\Delta E$ kleiner 0,3, besonders bevorzugt kleiner **0,2,** aufweisen.

Die Vicaterweichungstemperatur der Formkörper nach ISO 306-B50 ist günstigerweise mindestens 109°C, bevorzugt mindestens 112°C.

Die nominelle Bruchdehnung der Formkörper nach ISO 527 soll vorzugsweise mindestens 3,0 %, besonders bevorzugt 3,2 % sein.

Das E-Modul der Formkörper nach ISO 527 ist günstigerweise größer 3200 MPa, bevorzugt 3500 MPa.

Weiterhin weisen besonders geeignete Formkörper beim Spannungsrissbeständigkeitstest gemäß ESCR-Methode nach 30 Minuten bei einer Randfaserdehnung von 1 % einen normierten Spannungsrissbeständigkeitsfaktor größer 0,80 auf.

### Verwendungen

Die erfindungsgemäßen Formkörper können insbesondere als Überzug, Lack oder Folie eingesetzt verwendet werden. Spritzgegossene Formkörper können als Teile von Haushaltsgeräten, Kommunikationsgeräten, Hobby- oder Sportgeräten, Karosserieteile oder Teile von Karosserieteilen im Automobil-, Schiffs- oder Flugzeugbau verwendet werden. Typische Beispiele für Karosserieteile oder Teile von Karosserieteilen von Automobilen sind z. B. Spoiler, Blenden, Dachmodule oder Außenspiegelgehäuse.

### Beispiele

Im folgenden wird die Erfindung durch Beispiele näher erläutert, ohne dass hierdurch eine Beschränkung des Erfindungsgedankens erfolgen soll.

Für die Polymermatrix wurden die folgenden Komponenten a1), a2), b) und/oder c) verwendet.

Als Komponente a1) wurde eingesetzt: Ein handelsübliches Copolymerisat aus 75 Gew.-% Methylmethacrylat, 15 Gew.-% Styrol und 10 Gew.-% Maleinsäureanhydrid mit einer Lösungsviskositätszahl nach ISO 1628-6, 25°C, Chloroform von 68 ml/g

Als Komponente a2) wurde eingesetzt: ein handelsübliches Copolymerisat aus 99 Gew.-% Methylmethacrylat und 1 Gew.-% Methylacrylat mit einer Lösungsviskosität in Chloroform bei 25°C (ISO 1628 - Teil 6) von etwa 72 ml/g.

### Herstellung der Komponente b):

Eine Monomermischung aus 6355 g Methylmethacrylat, 1271 g Styrol und 847 g Maleinsäureanhydrid wird mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt.

Das resultierende Gemisch wird in eine Polymerisationskammer gefüllt und 10 Minuten entgast. Danach wird im Wasserbad 6 Stunden bei 60°C, nachfolgend 30 Stunden bei 55°C Wasserbadtemperatur polymerisiert. Nach etwa 30 Stunden erreicht das Polymerisationsgemisch mit 126°C seine Maximaltemperatur. Nach Entfernung der Polymerisationskammer aus dem Wasserbad wird das Polymerisat in der Polymerisationskammer noch 7 Stunden bei 117°C im Luftschrank getempert.

Das resultierende Copolymerisat ist klar und nahezu farblos und besitzt eine V.N. (Lösungsviskositätszahl nach ISO 1628-6, 25°C, Chloroform) von 48,7ml/g. Die Fließfähigkeit des Copolymerisats wurde nach ISO 1133 bei 230°C und 3,8kg mit MVR = 3,27 $cm^3$/10min bestimmt.

Die Komponente b) ist somit ein Copolymerisat aus 75 Gew.-% Methylmethacrylat, 15 Gew.-% Styrol und 10 Gew.-% Maleinsäureanhydrid.

Als Komponente c) wurde eingesetzt: ein handelsübliches Copolymerisat aus 99 Gew.-% Methylmethacrylat und 1 Gew.-% Methylacrylat mit einer Lösungsviskosität in Chloroform bei 25°C (ISO 1628 - Teil 6) von etwa 53 ml/g.

Als SAN-Copolymer wurde ®TYRIL 905UV der Fa. Dow Plastics eingesetzt.

Aus den einzelnen Komponenten wurden mittels Taumelmischer ein Dryblend hergestellt, der dann auf einem Doppelschneckenextruder Leistritz LSM 30/34 compoundiert wurde.

Die Zusammensetzungen der einzelnen Beispiele sind in Tabelle 1 dokumentiert.

Tabelle 1:

| | Polymermatrix ([Gew.-%]) | ®TYRIL 905UV [Gew.-%] |
|---|---|---|
| Beispiel B1 | Komponente a1) (70) | 30 |
| Vergleichsbeispiel VB1 | Komponente a1) (100) | |
| Beispiel B2 | Komponente a2) (35)<br>Komponente b) (35) | 30 |
| Vergleichsbeispiel VB2 | Komponente b) (50)<br>Komponente c) (50) | |
| Vergleichsbeispiel VB3 | Komponente b) (35)<br>Komponente c) (35) | 30 |

Der Volumen-Fließindex MVR (Prüfnorm ISO 1133: 1997) wurde bestimmt.

Auf einer Spritzgussmaschine Battenfeld BA 350 CD wurden aus allen Materialien Zugstäbe sowie Spritzplättchen gefertigt und hinsichtlich ihrer Eigenschaften nach folgenden Methoden geprüft:

| | |
|---|---|
| Vicat (16h/80°C): | Bestimmung der Vicat Erweichungstemperatur (Prüfnorm DIN ISO 306: August 1994) |
| E-Modul: | Bestimmung des E-Moduls (Prüfnorm: ISO 527-2) |
| Zugfestigkeit: | Bestimmung der Bruchdehnung (Prüfnorm: ISO 527) |
| ΔE: | gemessen an 3 mm Spritzgussplatten; Messgerät Color Eye 7000A, Fa. Mac Beth; Norm DIN 5033, DIN 6174 |

Spannungsrissbildung (ESCR):

Vor der Prüfung wurden alle Proben mindestens 24 h bei 23°C/50 % relative Feuchte gelagert.

Beim ESCR-Test nach Prof. Bledzki (A. Bledzki, C. Barth, Materialprüfung 40, 10 (1998)) wurde eine zeitlich konstante Randfaserdehnung mittels Dreipunktbiegeanordnung aufgebracht. Der Probekörper (Maße 80 mm x 20 mm x d, Dicke d = 4 mm) ruhte flach auf zwei Lagern im Abstand L = 64 mm.

Der konkrete Versuchsaufbau wird in den Abbildungen 1 und 2 veranschaulicht. Fig. 1 zeigt schematisch die Dreipunktbiegeanordnung im ESCR Test. Fig. 2 zeigt eine ESCR Testapparatur (die Anordnung aus Fig. 1 steht hier auf dem Kopf). Die zylindrischen Lager sowie die Druckfinne haben einen Radius von 10 mm.

Die Berechnung der notwendigen Durchbiegung s bei gegebener Randfaserdehnung ε (in der Mitte des Probekörpers auf der der Druckfinne gegenüberliegenden Seite) erfolgte wie in ISO 178 nach:

$$\varepsilon = \frac{6sd}{L^2} \qquad (2)$$

Die Durchbiegung s wurde mittels Rändelschraube eingestellt. ε wurde auf einen Wert von 1 % eingestellt. Nach dem Anfahren der Randfaserdehnung (Zeitpunkt $T_0$) wurde eine Haltezeit von 2 min gewartet, um erste Relaxationserscheinungen abzuwarten. Bei $T = T_1 = 2$ min wurde das schon vorher mittig aufgelegte Filterpapier mit den Maßen 50 x 10 $mm^2$ mit dem Medium (Isopropanol) benetzt. Gemessen wurde ab $T_1$ die Kraft, die zur Aufrechterhaltung der Randfaserdehnung nötig war, als Funktion der Zeit. Das Filterpapier wurde im Laufe der Messung mit dem Medium stets feucht gehalten. Die Messung wurde mit dem Bruch des Probekörpers (Kraft = 0), spätestens jedoch nach 30 min beendet.

Dieser Vorgang wurde für drei Probekörper wiederholt. Zum Vergleich wurde der Kraftverlauf auch für einen

Probekörper aufgenommen, der zwar der gleichen Randfaserdehnung, jedoch keinem Medium ausgesetzt war. Bei den Proben ohne Medieneinfluss nahm der gemessene Kraftwert langsam ab, wohingegen die Proben, die unter Medieneinfluss getestet werden, je nach Resistenz einen schnelleren Kraftabfall zeigten.

Das zeitabhängige Maß der Spannungsrissbeständigkeit $E_T^{norm}$ ergibt sich bei diesem Experiment aus dem Verhältnis der zur Aufrechterhaltung der Randfaserdehnung notwendigen Kräfte $F_T^{mM}$ mit und $F_T^{oM}$ ohne Medieneinfluss:

$$(3) \qquad E_T^{norm} = \frac{F_T^{mM} \cdot F_{T1}^{oM}}{F_{T1}^{mM} \cdot F_T^{oM}}$$

Dabei werden die Kräfte zusätzlich auf ihren Wert bei $T_1$ bezogen, so dass zum Zeitpunkt $T_1$: $E_1^{norm} = 1$. Es ergeben sich 3 Kurven im Diagramm, für jeden Probekörper mit Mediumeinfluss. Bezug ist jeweils die gleiche Messung für den Probekörper ohne Medieneinfluss. Normierte ESCR-Faktoren nahe 1 kennzeichnen eine gute ESCR-Beständigkeit, stark abfallende Werte von $E_T^{norm}$ über der Zeit T schlechte Beständigkeit.

Die Ergebnisse der Prüfungen an den Abmischungen und den entsprechenden Formteilen sind in Tabelle 2 zu sehen.

Tabelle 2:

| | B1 | VB1 | B2 | VB2 | VB3 |
|---|---|---|---|---|---|
| Vicat [°C] | 115,5 | 119 | 113,2 | 115 | 110,3 |
| MVR [ml/10min] | 1,9 | 1,9 | 2,9 | 4,5 | 5,2 |
| ESCR [min] | Kein Bruch - kontinuierlicher Abfall 0,92 bei 30 min | > 40 | Kein Bruch - kontinuierlicher Abfall 0,85 bei 30 min | 0,08-0,42 | 2,6 - 3,9 |
| E-Modul [MPa] | | 3600 | 3702 | 3500 | |
| Bruchdehnung [%] | | 3,5 | 3,4 | 3,1 | |

## Patentansprüche

**1.** Eingefärbte Zusammensetzung, enthaltend, jeweils bezogen auf das Gesamtgewicht der Zusammensetzung,

A) 50,0 Gew.-% bis 99,5 Gew.-% mindestens eines (Meth)acrylat(co)polymers und
B) 0,5 Gew.-% bis 50,0 Gew.-% mindestens eines Copolymerisats, erhältlich durch Polymerisation eines Monomerengemischs aus

i. 70 Gew.-% bis 92 Gew.-% eines vinylaromatischen Monomers und
ii. 8 Gew.-% bis 30 Gew.-% Acrylnitril oder Methacrylnitril oder deren Mischungen
iii. 0 Gew.- % bis 22 Gew.-% mindestens eines weiteren Monomeren,

**dadurch gekennzeichnet, dass** die Zusammensetzung bei 50°C einen ΔE kleiner 0,15 aufweist, wobei ΔE gemäß der Beziehung (1) definiert ist:

$$(1) \qquad \Delta E = \sqrt{(\Delta L^*)^2 + (\Delta a^*)^2 + (\Delta b^*)^2},$$

in welcher

ΔL* : die Änderung der Farbkoordinate L* verglichen mit der Farbkoordinate L* bei 23°C
Δa* : die Änderung der Farbkoordinate a* verglichen mit der Farbkoordinate a* bei 23°C
Δb* : die Änderung der Farbkoordinate b* verglichen mit der Farbkoordinate b* bei 23°C

bezeichnen,

die Zusammensetzung mindestens ein (Meth)acrylat(co)polymer a) mit einer Lösungsviskosität in Chloroform bei 25°C (ISO 1628 - Teil 6) von größer 55 ml/g enthält, und wobei

- das (Meth)acrylat(co)polymer a) ein Copolymer aus Methylmethacrylat, Styrol und Maleinsäureanhydrid ist

oder

- das (Meth)acrylat(co)polymer a) ein Copolymer aus 95 Gew.-% bis 99,5 Gew.-% Methylmethacrylat und 0,5 Gew.-% bis 5 Gew.-% Methylacrylat ist und die Zusammensetzung weiterhin mindestens ein niedermolekulares (Meth)acrylat(co)polymer b) mit einer Lösungsviskosität in Chloroform bei 25°C (ISO 1628 - Teil 6) von kleiner/gleich 55 ml/g enthält, bei welchem es sich um ein Copolymer aus Methylmethacrylat, Styrol und Maleinsäureanhydrid handelt.

**2.** Zusammensetzung nach Anspruch 1, **dadurch gekennzeichnet, dass** das (Meth)acrylat(co)polymer a) eine Lösungsviskosität in Chloroform bei 25°C (ISO 1628 - Teil 6) von größer/gleich 65 ml/g aufweist.

**3.** Zusammensetzung nach Anspruch 1 oder 2, **dadurch gekennzeichnet, dass** das Copolymer B) durch Polymerisation eines Monomerengemischs, enthaltend

i. 75 Gew.-% bis 92 Gew.-% eines vinylaromatischen Monomers und
ii. 18 Gew.-% bis 25 Gew.-% Acrylnitril oder Methacrylnitril oder deren Mischungen,

erhältlich ist.

**4.** Zusammensetzung nach einem der Ansprüche 1 bis 3, **dadurch gekennzeichnet, dass** das (Meth)acrylat(co)polymer a) ein Copolymer aus

50 Gew.-% bis 90 Gew.-% Methylmethacrylat,
10 Gew.-% bis 20 Gew.-% Styrol und
5 Gew.-% bis 15 Gew.-% Maleinsäureanhydrid ist.

**5.** Zusammensetzung nach Anspruch 3 oder 4, **dadurch gekennzeichnet, dass** sie das (Meth)acrylat(co)polymer a) in einer Menge von mindestens 75 Gew.-%, bezogen auf das Gesamtgewicht aller (Meth)acrylat(co)polymere, enthält.

**6.** Zusammensetzung nach Anspruch 1, **dadurch gekennzeichnet, dass** das (Meth)acrylat(co)polymer b) ein Copolymer aus

50 Gew.-% bis 90 Gew.% Methylmethacrylat,
10 Gew.-% bis 20 Gew.-% Styrol und
5 Gew.-% bis 15 Gew.-% Maleinsäureanhydrid ist.

**7.** Zusammensetzung nach Anspruch 6, **dadurch gekennzeichnet, dass** die (Meth)acrylat(co)polymere a) und b), bezogen auf das Gesamtgewicht der (Meth)acrylat(co)polymere, in folgenden Mengenverhältnissen vorliegen:

a) 25 Gew.-% bis 75 Gew.-%
b) 25 Gew.-% bis 75 Gew.-%.

**8.** Zusammensetzung nach mindestens einem der vorhergehenden Ansprüche, **dadurch gekennzeichnet, dass** als Hilfsstoff ein Gleitmittel enthalten ist.

**9.** Zusammensetzung nach Anspruch 8, **dadurch gekennzeichnet, dass** als Formtrennmittel Stearylalkohol enthalten ist.

**10.** Zusammensetzung nach mindestens einem der vorhergehenden Ansprüche, **dadurch gekennzeichnet, dass** die Zusammensetzung einen Volumen-Schmelzindex MVR, gemessen nach ISO 1133 bei 230°C und 3,8 kg, von größer 1,2 $cm^3$/10 min aufweist.

**11.** Zusammensetzung nach einem oder mehreren der vorangehenden Ansprüche, **dadurch gekennzeichnet, dass** sie in Form eines Granulats vorliegt.

**12.** Zusammensetzung nach einem oder mehreren der vorangehenden Ansprüche, **dadurch gekennzeichnet, dass** die Zusammensetzung bei 80°C einen ΔE kleiner 0,3 aufweist.

**13.** Verfahren zur Herstellung von Formkörpern, **dadurch gekennzeichnet, dass** man eine Zusammensetzung nach einem oder mehreren der vorangehenden Ansprüche umformt.

**14.** Verfahren nach Anspruch 13, **dadurch gekennzeichnet, dass** man die Zusammensetzung extrudiert oder spritzgießt.

**15.** Formkörper, herstellbar nach einem Verfahren gemäß Anspruch 13 oder 14, **dadurch gekennzeichnet, dass** der Formkörper bei 50°C einen ΔE kleiner 0,15 aufweist.

**16.** Formkörper nach Anspruch 15, **dadurch gekennzeichnet, dass** er bei 80°C einen ΔE kleiner 0,3 aufweist.

**17.** Formkörper nach Anspruch 15 oder 16, **dadurch gekennzeichnet, dass** er eine oder mehrere der folgenden Eigenschaften aufweist

a. eine Vicaterweichungstemperatur nach ISO 306-B50 von mindestens 109°C,
b. eine nominelle Bruchdehnung nach ISO 527 von mindestens 3,0 % und/oder
c. ein E-Modul nach ISO 527 größer 3200 MPa.

**18.** Formkörper nach mindestens einem der Ansprüche 15 bis 17, **dadurch gekennzeichnet, dass** er beim Spannungsrissbeständigkeitstest gemäß ESCR-Methode nach 30 Minuten bei einer Randfaserdehnung von 1 % einen normierten Spannungsrissbeständigkeitsfaktor größer 0,80 aufweist.

**19.** Verwendung der Formkörper nach einem oder mehreren der Ansprüche 15 bis 18 als Halbzeug, Überzug, Lack oder Folie.

**20.** Verwendung nach Anspruch 19 als Teile von Haushaltsgeräten, Kommunikationsgeräten, Hobby- oder Sportgeräten und als Karosserieteile oder Teile von Karosserieteilen im Automobil-, Schiffs- oder Flugzeugbau.

## Claims

**1.** Coloured composition containing, based in each case on the total weight of the composition,

A) 50.0 % by weight to 99.5 % by weight of at least one (meth)acrylate (co)polymer and
B) 0.5 % by weight to 50.0 % by weight of at least one copolymer obtainable by polymerisation of a monomer mixture comprising

i. 70 % by weight to 92 % by weight of a vinylaromatic monomer and
ii. 8 % by weight to 30 % by weight of acrylonitrile or methacrylonitrile or mixtures thereof and
iii.0 % by weight to 22 % by weight of at least one further monomer,

**characterized in that** the composition has a ΔE of less than 0.15 at 50°C, ΔE being defined according to the relationship (1):

$$(1) \qquad \Delta E = \sqrt{(\Delta L^*)^2 + (\Delta a^*)^2 + (\Delta b^*)^2} \ ,$$

in which

ΔL* designates the change in the colour coordinate L* compared with the colour coordinate L* at 23°C
Δa* designates the change in the colour coordinate a* compared with the colour coordinate a* at 23°C

Δb* designates the change in the colour coordinate b* compared with the colour coordinate b* at 23°C,

the composition contains at least one (meth)acrylate (co)polymer a) having a solution viscosity in chloroform at 25°C (ISO 1628 - part 6) of greater than 55 ml/g, and

- the (meth)acrylate (co)polymer a) being a copolymer of methyl methacrylate, styrene and maleic anhydride or
- the (meth)acrylate (co)polymer a) being a copolymer of 95 % by weight to 99.5 % by weight of methyl methacrylate and 0.5 % by weight to 5 % by weight of methyl acrylate and the composition furthermore containing at least one low molecular weight (meth)acrylate (co)polymer b) having a solution viscosity in chloroform at 25°C (ISO 1628 - part 6) of less than or equal to 55 ml/g, which is a copolymer of methyl methacrylate, styrene and maleic anhydride.

**2.** Composition according to Claim 1, **characterized in that** the (meth)acrylate (co)polymer a) has a solution viscosity in chloroform at 25°C (ISO 1628 - part 6) of greater than or equal to 65 ml/g.

**3.** Composition according to Claim 1 or 2, **characterized in that** the copolymer B) is obtainable by polymerisation of a monomer mixture containing

i. 75 % by weight to 92 % by weight of a vinylaromatic monomer and
ii. 18 % by weight to 25 % by weight of acrylonitrile or methacrylonitrile or mixtures thereof.

**4.** Composition according to one of Claims 1 to 3, **characterized in that** the (meth)acrylate (co)polymer a) is a copolymer of

50 % by weight to 90 % by weight of methyl methacrylate,
10 % by weight to 20 % by weight of styrene and
5 % by weight to 15 % by weight of maleic anhydride.

**5.** Composition according to Claim 3 or 4, **characterized in that** it contains the (meth)acrylate (co)polymer a) in an amount of at least 75 % by weight, based on the total weight of all (meth)acrylate (co)polymers.

**6.** Composition according to Claim 1, **characterized in that** the (meth)acrylate (co)polymer b) is a copolymer of

50 % by weight to 90 % by weight of methyl methacrylate,
10 % by weight to 20 % by weight of styrene and
5 % by weight to 15 % by weight of maleic anhydride.

**7.** Composition according to Claim 6, **characterized in that** the (meth)acrylate (co)polymers a) and b) are present in the following ratios, based on the total weight of the (meth)acrylate (co)polymers:

a) 25 % by weight to 75 % by weight
b) 25 % by weight to 75 % by weight.

**8.** Composition according to at least one of the preceding claims, **characterized in that** a lubricant is present as an auxiliary.

**9.** Composition according to Claim 8, **characterized in that** stearyl alcohol is present as a mould release agent.

**10.** Composition according to at least one of the preceding claims, **characterized in that** the composition has a melt volume flow rate MVR, measured according to ISO 1133 at 230°C and 3.8 kg, of greater than 1.2 $cm^3$ / 10 min.

**11.** Composition according to one or more of the preceding claims, **characterized in that** it is present in the form of granules.

**12.** Composition according to one or more of the preceding claims, **characterized in that** the composition has a ΔE of less than 0.3 at 80°C.

**13.** Process for the production of mouldings, **characterized in that** a composition according to one or more of the preceding claims is formed.

**14.** Process according to Claim 13, **characterized in that** the composition is extruded or injection moulded.

**15.** Moulding which can be produced by a process according to Claim 13 or 14, **characterized in that** the moulding has a ΔE of less than 0.15 at 50°C.

**16.** Moulding according to Claim 15, **characterized in that** it has a ΔE of less than 0.3 at 80°C.

**17.** Moulding according to Claim 15 or 16, **characterized in that** it has one or more of the following properties

a. a Vicat softening temperature according to ISO 306-B50 of at least 109°C,
b. a nominal elongation at break according to ISO 527 of at least 3.0 % and/or
c. a modulus of elasticity according to ISO 527 of greater than 3200 MPa.

**18.** Moulding according to at least one of Claims 15 to 17, **characterized in that** it has a normalised stress cracking resistance factor greater than 0.80 in the stress cracking resistance test according to the ESCR method after 30 minutes at an outer fibre strain of 1 %.

**19.** Use of the mouldings according to one or more of Claims 15 to 18 as a semi-finished product, covering, finish or film.

**20.** Use according to Claim 19 as parts of household appliances, communication devices, hobby or sports devices and as bodywork parts or parts of bodywork parts in automotive, ship or aircraft construction.

**Revendications**

**1.** Composition colorée, contenant, chaque fois par rapport au poids total de la composition,

A) 50,0 % en poids à 99,5 % en poids d'au moins un (co)polymère de (méth)acrylate et
B) 0,5 % en poids à 50,0 % en poids d'au moins un copolymérisat, pouvant être obtenu par polymérisation d'un mélange de monomères composé de

i. 70 % en poids à 92 % en poids d'un monomère vinylaromatique et
ii. 8 % en poids à 30 % en poids d'acrylonitrile ou de méthacrylonitrile ou de mélanges de ceux-ci,
iii. 0 % en poids à 22 % en poids d'au moins un autre monomère,

**caractérisée en ce que** la composition présente à 50 °C une valeur ΔE inférieure à 0,15, la valeur ΔE étant définie par la relation (1) :

$$(1) \qquad \Delta E = \sqrt{(\Delta L^*)^2 + (\Delta a^*)^2 + (\Delta b^*)^2},$$

dans laquelle

ΔL* désigne : la variation de la coordonnée chromatique L* par comparaison avec la coordonnée chromatique L* à 23 °C
Δa* désigne : la variation de la coordonnée chromatique a* par comparaison avec la coordonnée chromatique a* à 23 °C
Δb* désigne : la variation de la coordonnée chromatique b* par comparaison avec la coordonnée chromatique b* à 23 °C,

la composition contient au moins un (co)polymère de (méth)acrylate a) ayant une viscosité en solution dans du chloroforme à 25 °C (ISO 1628 - section 6) de plus de 55 ml/g, et

- le (co)polymère de (méth)acrylate a) étant un copolymère de méthacrylate de méthyle, styrène et anhydride

maléique

ou

- le (co)polymère de (méth)acrylate a) étant un copolymère de 95 % en poids à 99,5 % en poids de méthacrylate de méthyle et 0,5 % en poids à 5 % en poids d'acrylate de méthyle et la composition contenant en outre au moins un (co)polymère de (méth)acrylate de faible masse moléculaire b) ayant une viscosité en solution dans du chloroforme à 25 °C (ISO 1628 - section 6) inférieure/égale à 55 ml/g, qui consiste en un copolymère de méthacrylate de méthyle, styrène et anhydride maléique.

**2.** Composition selon la revendication 1, **caractérisée en ce que** le (co)polymère de (méth)acrylate a) présente une viscosité en solution dans du chloroforme à 25 °C (ISO 1628 - section 6) supérieure/égale à 65 ml/g.

**3.** Composition selon la revendication 1 ou 2, **caractérisée en ce que** le copolymère B) peut être obtenu par polymérisation d'un mélange de monomères, contenant

i. 75 % en poids à 92 % en poids d'un monomère vinylaromatique et
ii. 18 % en poids à 25 % en poids d'acrylonitrile ou de méthacrylonitrile ou de mélanges de ceux-ci.

**4.** Composition selon l'une quelconque des revendications 1 à 3, **caractérisée en ce que** le (co)polymère de (méth) acrylate a) est un copolymère de

50 % en poids à 90 % en poids de méthacrylate de méthyle,
10 % en poids à 20 % en poids de styrène et
5 % en poids à 15 % en poids d'anhydride maléique.

**5.** Composition selon la revendication 3 ou 4, **caractérisée en ce qu'**elle contient le (co)polymère de (méth)acrylate a) en une quantité d'au moins 75 % en poids, par rapport au poids total de tous les (co)polymères de (méth)acrylate.

**6.** Composition selon la revendication 1, **caractérisée en ce que** le (co)polymère de (méth)acrylate b) est un copolymère de

50 % en poids à 90 % en poids de méthacrylate de méthyle,
10 % en poids à 20 % en poids de styrène et
5 % en poids à 15 % en poids d'anhydride maléique.

**7.** Composition selon la revendication 6, **caractérisée en ce que** les (co)polymères de (méth)acrylate a) et b) sont présents, par rapport au poids total des (co)polymères de (méth)acrylate, en les proportions suivantes :

a) 25 % en poids à 75 % en poids
b) 25 % en poids à 75 % en poids.

**8.** Composition selon au moins l'une quelconque des revendications précédentes, **caractérisée en ce qu'**un lubrifiant est contenu en tant qu'adjuvant.

**9.** Composition selon la revendication 8, **caractérisée en ce que** de l'alcool stéarylique est contenu en tant qu'agent de démoulage.

**10.** Composition selon au moins l'une quelconque des revendications précédentes, **caractérisée en ce que** la composition présente un indice de fluidité à chaud MVR, mesuré selon ISO 1133 à 230 °C et sous 3,8 kg, de plus de 1,2 $cm^3$/10 min.

**11.** Composition selon une ou plusieurs des revendications précédentes, **caractérisée en ce qu'**elle se trouve sous forme d'un granulé.

**12.** Composition selon une ou plusieurs des quelconque des revendications précédentes, **caractérisée en ce que** la composition présente à 80 °C une valeur ΔE inférieure à 0,3.

**13.** Procédé pour la production de corps moulés, **caractérisé en ce qu'**on met en forme une composition selon une ou plusieurs des revendications précédentes.

**14.** Procédé selon la revendication 13, **caractérisé en ce qu'**on extrude ou moule par injection la composition.

**15.** Corps moulé, pouvant être produit conformément à un procédé selon la revendication 13 ou 14, **caractérisé en ce que** le corps moulé présente à 50 °C une valeur $\Delta E$ inférieure à 0,15.

**16.** Corps moulé selon la revendication 15, **caractérisé en ce qu'**il présente à 80 °C une valeur $\Delta E$ inférieure à 0,3.

**17.** Corps moulé selon la revendication 15 ou 16, **caractérisé en ce qu'**il présente une ou plusieurs des propriétés suivantes

a. une température de ramollissement Vicat selon ISO 306-B50 d'au moins 109 °C,
b. un allongement nominal à la rupture selon ISO 527 d'au moins 3,0 % et/ou
c. un module d'élasticité selon ISO 527 supérieur à 3 200 MPa.

**18.** Corps moulé selon au moins l'une quelconque des revendications 15 à 17, **caractérisé en ce qu'**il présente dans l'essai de résistance à la fissuration sous contrainte selon la méthode ESCR après 30 minutes, pour un allongement des fibres périphériques de 1 %, un facteur normalisé de résistance à la fissuration sous contrainte supérieur à 0,80.

**19.** Utilisation des corps moulés selon une ou plusieurs des revendications 15 à 18 en tant que produit semi-fini, revêtement, laque ou film.

**20.** Utilisation selon la revendication 19, en tant que pièces d'appareils ménagers, appareils de communication, appareils de sport ou de loisir et en tant qu'éléments de carrosseries ou de pièces d'éléments de carrosseries dans la construction d'automobiles, de bateaux ou d'aéronefs.

Fig. 1

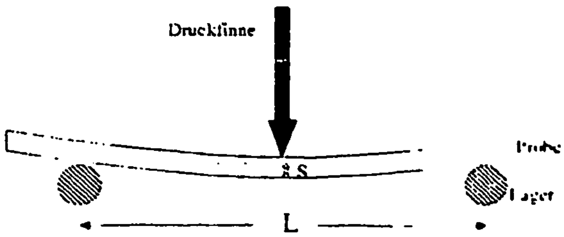


Fig. 2

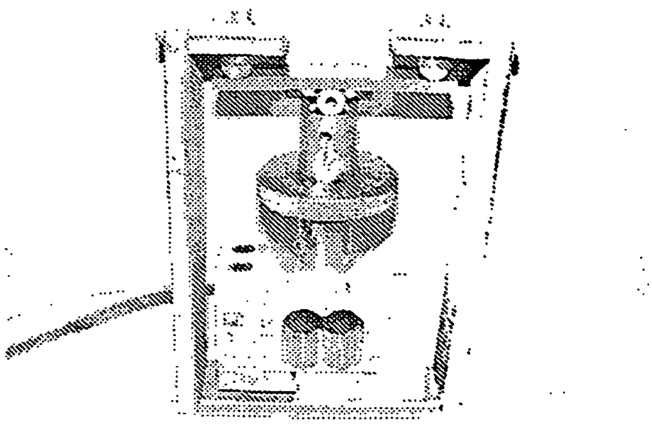

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0508173 B1
- EP 0627461 B1
- JP 3217446 A
- JP 2272050 A
- WO 2005047392 A1
- EP 264590 A
- JP 60147417 A
- DE OS4440219 A
- GB PS1472195 A


### In der Beschreibung aufgeführte Nicht-Patentliteratur


- **B. H. F. MARK et al.** Encyclopedia of Polymer Science and Engineering. J. Wiley, 1989, vol. 10, 1 ff
- **B. H. F. MARK et al.** Encyclopedia of Polymer Science and Engineering. J. Wiley, 1989, vol. 10, 1 ff
- Kunststoffhandbuch. Polystyrol. Carl-Hanser-Verlag, 1969, vol. V, 124 ff
- **LACKEN ; KUNSTSTOFFEN.** Polyolefinkunststoffen. *Kunststoffe,* 1984, vol. 74 (10), 620-623
- *Farbe + Lack,* September 1990, vol. 96, 689-693
- **A. BLEDZKI ; C. BARTH.** *Materialprüfung,* 1998, vol. 40, 10